# EUROPEAN PATENT APPLICATION

(11) **EP 4 791 120 A1**
(43) Date of publication of application: **12.08.2026**
(21) Application number: 26156258.1
(22) Date of filing: 04.02.2026
(51) Int. Cl.: H05H 1/24

(54) **A COMBINED CAVITATION AND PLASMA GENERATION SYSTEM AND A METHOD OF GENERATING CAVITATION AND A PLASMA**

(30) Priority: 07.02.2025 LU 509844
(71) Applicant: Univerza v Ljubljani, 1000 Ljubljana (SI)
(72) Inventor: ZUPANC, Mojca, 1000 Ljubljana (SI); PETKOVSEK, Martin, 1000 Ljubljana (SI); GOSTISA, Jurij, 1000 Ljubljana (SI); DULAR, Matevz, 1000 Ljubljana (SI); DAHLE, Sebastian, 1000 Ljubljana (SI)
(74) Representative: Zacco GmbH

(57) **Abstract**

A combined cavitation and plasma generation system, comprising:
a housing (11) with a cavitation chamber (23) and at least a pair of a rotor (15) and a stator (17) arranged in the cavitation chamber (23), the rotor (15) and the stator (17) having at least a pair of surfaces (19, 21) facing each other, such that at least a gap (23) is formed between the rotor and stator surfaces (19, 21) in the cavitation chamber (13), the rotor (15) being rotatable with respect to the stator (17) and the stator and rotor surfaces (19, 21) are configured to generate, when the rotor (15) rotates, cavitation in a liquid, which is during the operation of the system in the gap (23) between the rotor and stator surfaces (19, 21), and
at least one first electrode (27) and at least one second electrode (29), which is a counter electrode for the at least one first electrode (27), wherein the at least one first electrode (27) and the at least one second electrode (29) are exposed to the cavitation chamber (13) for generating, in particular igniting, a plasma discharge in at least a portion of the cavitation chamber (13), in particular in the gap (23) or at least in a portion of the gap (23),
wherein at least one and preferably each of the at least one first electrode (27) is arranged in a passage (31) in the stator (17), wherein the passage (31) extends from a side (45) of the stator (17), which is opposite to the surface (21), to a side of the stator (17) having the surface (21), and
wherein an end (33) of the first electrode (27) is offset from a plane of the surface (21) of the stator (17), so that a small space (35) is formed in the passage (31) between the end (33) of the first electrode (27) and the gap (23).

## Description

The present disclosure relates to a combined cavitation and plasma generation system and to a method of generating cavitation and a plasma.

The physico-chemical effects of both cavitation and plasma are known and have been used for disinfection of various aqueous matrices and for the degradation or the removal of various micropollutants. Although both techniques have their limitations, some combined approaches have already been described in the past.

As described in the scientific article by Mojca Zupanc, Gregor Prime, Matevž Dular, Martin Petkovšek, Robert Roškar, Rok Zaplotnik, Jurij Trontelj: "Proof-of-concept for removing micropollutants through a combination of sub-atmospheric-pressure non-thermal plasma and hydrodynamic (super)cavitation", Ultrasonics Sonochemistry, Volume 111, 2024, 107110, ISSN 1350-4177, an ignition of the plasma in a cavitation cloud could be formed in the Venturi constriction, where water is circulated through the system using an additional pump. Furthermore, the ignition of a plasma in a single stable cavitation bubble, also called supercavitation, formed in the Venturi constriction using an additional pump could be shown.

US10494274B2 describes a rotational device creating cavitation, the resulting microbubbles being then fed into a plasma reactor that makes use of a direct current breakdown discharge plasma within the liquid.

US8926601B2 describes that laser-induced breakdown plasma can generate cavitation, e.g. for surgery.

US8323276B2 and US7789879B relate to electrical microsurgery using short high voltage pulses to produce a direct current breakdown discharge plasma within a liquid in order to generate the cavitation used for tissue cutting.

US2013/0126332A1 describes a plasma whirl reactor in which a liquid is fine sprayed into a mill, where the ambient atmosphere is ignited as a plasma via RF excitation. US11807555B2 describes that a power supply can enable formation of a continuous stable gaseous discharge inside the cavitation bubble forming conditions useful for destruction of viruses.

WO2021/115498A1 describes a device for treatment of liquids and a method for treatment of liquids.

EP4197653A1 describes a cavitation system, generator and related aspects.

WO2022/112191 A1 describes a liquid decontamination system comprising a cavitation device and a method for decontamination of a liquid.

CN 111 807 499 A discloses a hydrodynamic cavitation and electrocatalysis integrated antibiotic wastewater degradation device which comprises a rotor and a stator. The stator is a hollow sealed cylinder, and an electrode is arranged on the inner wall of the stator.

JP 2009 190003 A discloses a water treatment apparatus which includes a main body, a nozzle, and electric discharge parts each comprising a high-voltage electrode and earth electrodes.

CN 119 118 415 A discloses a system and a method for degrading organic wastewater through cooperation of hydrodynamic cavitation and plasma.

CA 2 397 124 A1 discloses a method for disinfecting water and other dense fluid media containing microorganisms in a dense media plasma reactor. A first electrode is mounted for a rotation about an axis in a chamber and has an end piece which is formed of conductive material with a planar surface. A plurality of pins is mounted in an array projecting from the planar surface. A non-rotating second electrode is mounted in the chamber and has an end piece of conductive material with a planar surface, with the planar surfaces of the end pieces of the first and second electrodes are separated from each other by a gap. The non-rotating second electrode comprises a gas inlet formed through the electrode to provide gas into the gas space between the planar faces of the end pieces of the upper and lower electrodes.

It is an object of the present invention to provide an improved system for cavitation and plasma generation. It is a further object of the present invention to provide an improved method of generating cavitation and plasma in a system.

The object is satisfied by a combined cavitation and plasma generation system in accordance with the features of claim 1, and, respectively, by a method of generating cavitation and plasma in accordance with the features of claim 14.

In an aspect, the present disclosure relates to a combined hydrodynamic cavitation and plasma generation system. The system comprises a housing with a cavitation chamber and at least a pair of a rotor and a stator arranged in the cavitation chamber, the stator and the rotor having at least a pair of surfaces facing each other, such that at least a gap is formed between the rotor and stator surfaces in the cavitation chamber, the rotor being rotatable with respect to the stator and the stator and rotor surfaces are configured to generate, when the rotor rotates, in particular during the intended use of the system, cavitation in a liquid, which is during the operation of the system in the gap between the rotor and stator surfaces. Optionally, the combined cavitation and plasma generation system comprises at least one gas inlet into the cavitation chamber for providing a gas, in particular a gas stream, in the cavitation chamber and/or the gap. The combined cavitation and plasma generation system further comprises at least one first electrode and at least one second electrode, which is a counter electrode for the at least one first electrode, wherein the at least one first electrode and the at least one second electrode are exposed to the cavitation chamber for generating, in particular igniting, a plasma discharge in at least a portion of the cavitation chamber, optionally in the gap or at least a portion of the gap, further optionally in the gas provided via the optional gas inlet.

The combined cavitation and plasma generation system is configured to generate, in particular simultaneously, cavitation and a plasma in the gap between a rotor surface and a stator surface that are facing each other. The plasma is usually a non-thermal plasma, also called cold plasma or non-equilibrium plasma, which is a plasma which is not in thermodynamic equilibrium, because the electron temperature is much hotter than the temperature of heavy species (ions and neutrals).

The plasma is in particular generated, in particular ignited, within the gas-vapour bubbles formed due to hydrodynamic cavitation formed between the rotor-stator gap. In some embodiments, additional gas may be provided via a gas inlet to the cavitation chamber and in particular to the gap. The plasma may be ignited in the gas, in particular in gas bubbles, provided via the gas inlet to the cavitation chamber and the gap. In particular, the plasma may be ignited in the gas where it enters from the gas inlet into the cavitation chamber or directly into the gap, as in this region a high concentration of gas is present while the concentration of liquid is low in this region. The mixing of the plasma discharge, in particular non-thermal plasma discharge, with cavitation bubbles generated in the liquid in the gap may reduce the breakdown voltage and facilitate a stable operation of the system while the total power consumption can be kept low. This allows the system to treat or purify liquids, such as water, including disinfection and micropollutant reduction, in an efficient way using both, a non-thermal plasma and hydrodynamic cavitation.

The two surfaces of the rotor and the stator are configured to generate hydrodynamic cavitation in the liquid (cavitation as used herein means hydrodynamic cavitation). They are in contact with the liquid during the intended use of the system. Therefore, at least one of the surfaces can be structured. In particular, a surface may have protuberances, protrusions or recesses which, when the rotor rotates in relation to the stator, can cause cavitation in the liquid provided in the gap. Examples of such structured surfaces are described in WO2022/112191 A1, the content of which is incorporated herein by way of reference.

The gap may have a width in the range of 1 to 5 millimetre.

In some embodiments, at least one of the two facing surfaces of the rotor and the stator comprises a plurality of protrusions, which are distributed across the surface. Preferably, the stator comprises a plurality of first protrusions and the rotor comprises a plurality of second protrusions, which are distributed across the respective surface of the stator and rotor. In some embodiments, one and preferably all of the first protrusions are spaced apart from the second protrusions in a radial direction with regard to the rotation axis of the rotor.

In some embodiments, at least one of the stator and rotor has the form of a disc and/or a center axis of the stator disc is aligned with a rotational axis of the rotor disc and the surfaces are provided on the stator disc and on the rotor disc.

In some embodiments, the at least a pair of surfaces facing each other of the rotor and stator includes rotor and stator surfaces that face each other only temporarily during rotation of the rotor with respect to the stator, and the gap extends into the region between the rotor and stator surfaces which face each other temporarily. The rotor and stator surface may have a more complex structure, including protrusions and depressions or only protrusions on the rotor and stator surfaces. For example, in some embodiments, protrusions on the rotor surface pass temporarily during rotation of the rotor closely by protrusions on the stator surface, thereby forming for a short time period a volume region with a small gap in which cavitation can occur. The gap as mentioned herein extends into this small gap, and either in the cavitation bubbles generated in this small gap or in bubbles from an optional gas inlet, which enter the small gap a plasma can be ignited. This small gap region which is temporally present between surfaces that run past each other during rotation of the rotor with respect to the stator is herein also considered as a part of the gap. Such surfaces that run past each other during rotation of the rotor may extend in particular parallel to the axis of rotation of the rotor on the stator or rotor and thus form a partial surface of the stator or rotor surface.

The at least one first and second electrodes may be exposed to the gap of the cavitation chamber.

Each of the at least one first electrode may pass through a passage in the stator from a backside, which is opposite to the surface, so that the end of the electrode lies at least approximately in a plane of the surface of the stator, such that the end of the electrode is exposed to the gap. The passage may be formed in form of a through-hole in the stator, which extends through the stator from the backside of the stator to the stator surface. The at least one first electrode may be inserted in the passage and an electric line to a voltage supply of the system may be connected to the at least one first electrode from the backside.

The end of at least one and preferably of each of the at least one first electrode may be offset from the plane of the stator, so that a small volume is formed in the passage between the end of the first electrode and the plane of the surface. The small volume may serve as a major region in which plasma ignition takes place.

In accordance with the system of claim 1, at least one and preferably each of the at least one first electrode is arranged in a passage in the stator, and the passage extends from a side of the stator, which is opposite to the surface, to a side of the stator having the surface. An end of the first electrode is offset from a plane of the surface of the stator, so that a small space is formed in the passage between the end of the first electrode and the gap.

A plasma may be generated more easily in gas bubbles that are present in the small space. The first electrode may be designed as a hollow electrode, in particular in form of a hollow cylinder, and may be used as a gas inlet for the gas into the cavitation chamber and the gap. The small space provided in the passage may serve as a volume where gas bubbles that exit the hollow electrode can be ignited more easily than gas bubbles in the gap. Thus, ignition of a plasma may be more efficient.

In some embodiments, the end of the first electrode is exposed to the gap, in particular to the small space in the passage which exits into the gap. In some embodiments, the end of the first electrode is arranged inside the passage at a distance from the plane of the surface of the stator. In some embodiments, the passage extends continuously through the stator from the side, which is opposite to the surface, to the side having the surface.

Furthermore, the at least one first electrode may be electrically isolated from the stator.

The at least one first electrode may comprise two or more electrodes. The two or more electrodes may be arranged in one or more circles around a centre of the stator. Using more than one first electrode may help to obtain a stable plasma operation.

Each of the at least one first electrode may be designed as a hollow electrode, in particular in form of a hollow cylinder. The hollow electrode may be arranged in a passage of the stator. The hollow electrode may be used as a gas inlet for the gas into the cavitation chamber. In particular, the hollow electrode may be connected to a hose of a gas supply, so that the hollow electrode may serve as gas inlet for providing gas to the gap.

The at least one first electrode may consist of or comprise an electrically conductive material, such as brass, copper and silver.

The at least one first electrode may be isolated with regard to the stator. A separate isolation may be arranged between each of the at least one first electrode and the stator. The stator may consist of a non-conductive material, in particular to isolate electrically the stator from the housing. The stator may consist of a plastic material, such as plexiglass, or any other suitable material, such as ceramic material. In some embodiments, the stator may be formed of a metal or an alloy, for example stainless steel, and an isolation may be used to electrically isolate the stator from each of the at least one first electrode.

The at least one second electrode may be formed by the housing or it may be arranged in the housing. The housing may consist of or comprise an electrically conductive material. In particular, an inner surface of the housing which is facing the cavitation chamber may comprise or consist of a conductive material. The housing may be made of stainless steel. The at least one second electrode and in particular the housing may be connected to a voltage supply of the system, in particular a high voltage supply.

The housing may be connected to a pole, such as ground, of the voltage supply, while the at least one first electrode is connected to the other pole of the high voltage supply.

The cavitation chamber may comprise a liquid inlet and a liquid outlet. One of the liquid inlet and the liquid outlet may be arranged in the stator, in particular in a passage through the stator, and the other one of the liquid inlet and the liquid outlet may be arranged in the housing. The liquid inlet or liquid outlet in the stator may be arranged along the central axis of the stator.

The liquid outlet may be arranged in the housing such that the liquid outlet is radially outward to the gap. The rotor may be used as a pump for the liquid. No other pump for the liquid may be required in the system. Alternatively, at least one of the liquid inlet and a liquid outlet may be connected to a pump, which is used to pump the liquid through the system.

The housing may have a cavity in which the chamber is provided. The housing may have a cylindrical form. The housing may have an open side that is closed by the stator. The other side may be closed by a wall of the housing. The stator may have a radially outer surface that is threaded. The housing may be threaded in a radially inner surface region adjacent the open side. The stator may be threaded into the housing.

The system may further comprise a motor, such as an electric motor, for driving the rotor. The rotor may be arranged in the housing such that it rotates about a rotation axis. The rotor may be rotatably mounted in the housing, for example by use of a seal bearing. The rotation axis may be aligned with a center axis of the stator.

The at least one gas inlet may be connected to a gas pump, which is configured to pump the gas into the cavitation chamber and in particular into the gap. The gas pump may be regulated to provide a constant stream of gas.

In an aspect, the disclosure relates to a method of generating, in particular simultaneously, cavitation and a plasma in a combined cavitation and plasma generation system, in particular a system as described herein. The method comprises the steps of providing a liquid in the gap of the cavitation chamber, optionally providing a gas or a gas stream through at least one gas inlet to the cavitation chamber, and providing a high voltage between the at least one first electrode and the at least one second electrode. The plasma may be ignited in bubbles caused by hydrodynamic cavitation and/or in gas bubbles from the gas which can be optionally provided in the cavitation chamber via a gas inlet.

At least in some embodiments, the system and/or method in accordance with the present disclosure exploits the synergy of hydrodynamic cavitation and non-thermal plasma discharge, in order to treat liquids. Hydrodynamic cavitation is generated in a rotary hydrodynamic cavitation generator in which electrodes in the form of tubes are installed through which a non-thermal plasma is formed in a cavitation chamber under overpressure conditions via a discharge. The rotating generator, in particular the rotor, may perform two functions: It creates the conditions for cavitation and it serves as a pump for pumping the liquid. The non-thermal discharge forms between the first and second electrodes. In some embodiments, the first electrodes are formed by brass tubes, which are evenly distributed over the stator of the cavitation chamber. A second electrode is formed by the housing, in particular the surface of the liquid stream, such as water, inside the electrically grounded cavitation chamber.

The mixing of the non-thermal plasma discharge with the cavitation bubbles may reduce the breakdown voltage for stable operation and the total power consumption. This allows the system to treat or purify liquids such as water, including disinfection and micropollutant reduction, in a more efficient way than existing technologies.

At least in some embodiments, the system and/or method in accordance with the present disclosure may synergistically combine plasma and cavitation in an efficient way. By igniting a plasma or plasma jet directly in the gap, it can increase the degradation of various pollutants beyond the individual effects of plasma alone or cavitation alone.

At least in some embodiments, the non-thermal plasma discharge, the generation of cavitation and the pumping of the liquid is provided by the system.

At least in some embodiments, it is possible to optionally adjust the type, pressure and flow rate of the gas added to the cavitation chamber.

At least in some embodiments, the plasma characteristics may be tailored through adjusting the electrical properties of the discharge, in particular by adjusting the gas flow and/or the electric voltage.

In some embodiments, the cavitation conditions within the cavitation chamber may be tailored through an adjustment of the rotor-stator geometry for improved oxidation potential of a single process.

A synergistic effect may be related to the short- and long-lived reactive species that the plasma and cavitation generate via the gas phase (ozone, oxygen radicals, hydroxyl ions, metastable atoms, various ions, hydrogen peroxide, etc.). Furthermore, cavitation bubbles promote the dissolution of these reactive species in the surrounding liquid, while the collapse of the cavitation bubbles triggers chemical reactions with these species. In this way, the transfer from the gas to the liquid phase is enhanced leading to an improved overall oxidation potential. This may help to solve the problem of igniting the plasma in the liquid phase, which usually requires excessive energy to produce the gas phase needed to ignite the plasma. The compact design of the disclosed system thus facilitates improvements of energy efficiency of such technology combinations.

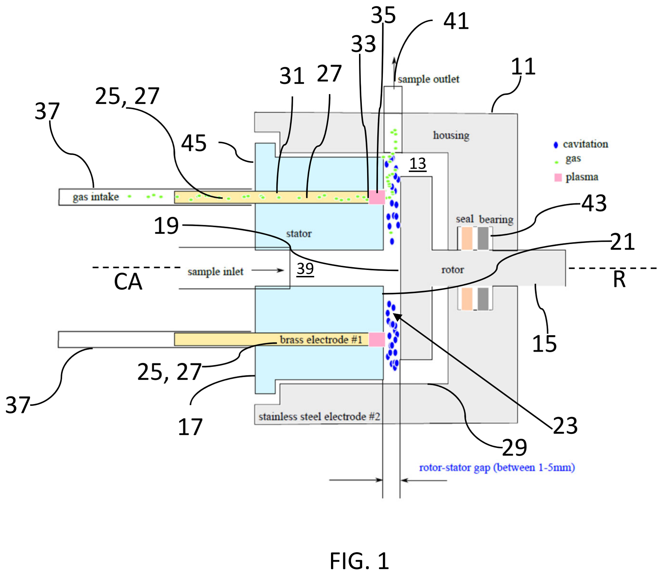

Various embodiments in accordance with the present disclosure will be described with reference to the drawing, in which
- FIG. 1: illustrates an embodiment of a combined cavitation and plasma generation system.

The combined cavitation and plasma generation system as shown in FIG. 1 comprises a housing 11 that provides a cavitation chamber 13 and at least a pair of a rotor 15 and a stator 17 arranged in the cavitation chamber 13. The stator 17 and the rotor 15 each have a surface 19, 21. The surface 19 of the rotor 15 and the surface 21 of the stator 17 are facing each other, such that a gap 23 is formed between the rotor and stator surfaces 19, 21 in the cavitation chamber 13. The rotor 15 is coupled to a motor, such as an electric motor (not shown). A bearing, such as a seal bearing 43, is used to support the rotor 15 so that it can rotate around a rotation axis R. The bearing 43 provides a gas-tight seal to the outside. The rotation axis R is preferably aligned with a center axis CA of the stator 17.

The stator and rotor surfaces 19, 21 are configured to generate cavitation in a liquid, which is during the operation of the system in the cavitation region 13 and in particular in the gap 23 between the rotor and stator surfaces 19, 23. The two surfaces 19, 21 of the rotor 15 and the stator 17 are in contact with the liquid during the intended use of the system and at least one of the surfaces 19, 21 is structured in order to produce cavitation in the liquid, when the rotor 15 rotates with regard to the stator 17 during the intended use of the system.

The combined cavitation and plasma generation system of FIG. 1 comprises optional gas inlets 25 into the cavitation chamber 13 and in particular into the gap 23 for providing a gas, such as a gas stream, in the gap 23.

The combined cavitation and plasma generation system of FIG. 1 comprises a plurality of first electrodes 27 and a second electrode 29, which is a counter electrode for the first electrodes 27 and which is formed by the housing. 29. The first and second electrodes 27, 29 can be connected to a high voltage source (not shown) of the system. The first electrodes 27 and the second electrode 29 are exposed to the cavitation chamber 13 for generating, in particular igniting, a plasma discharge in at least a portion of the gap 23 and in particular in the gas stream, such as in gas bubbles, provided by the flow of gas in the gap 23. The gas stream in the gap 23 may comprise or consists of a plurality of gas bubbles in the gap 23. A plasma may also be ignited in bubbles which are caused by hydrodynamic cavitation in the gap 23.

The housing 11 can have a cylindrical form as indicated in FIG. 1 and in which the rotor 15 is arranged in a closed end side of the cylinder. As shown in FIG. 1, the housing 11 has an open side on the left side of FIG. 1. The open side is closed by the stator 17. In particular, the stator 17 may be threaded into the open side of the housing 11, or the stator 17 may in another way be inserted into the open side of the housing 11. A leak tight connection can be formed between the stator 17 and the housing 11.

In the embodiment of FIG. 1, each first electrode 27 is formed of a hollow cylinder, for example made of brass, and inserted into a passage 31 that is formed by a through hole in the stator 17 and which extends from a backside 45 of the stator 17 to its surface 21.

The end 33 of each first electrode 27 lies at least approximately in a plane of the surface 21 of the stator 17, such that the end 33 of the electrode 27 is exposed to the gap 23. Preferably, the end 33 of each first electrode 27 is offset from the plane of the stator surface 21, so that a small volume 35 is formed in the passage between the end 33 of the first electrode 27 and the plane of the surface 21. At the exit region of the gas out of a respective first electrode 27, which corresponds to the volume 35, usually a plasma is formed in the gas clouds in the volume 35 due to high electric voltage provided between the first and second electrodes 27, 29.

Each hollow electrode 27 is used as gas inlet for the gas into the cavitation chamber. Each hollow electrode 27 is connected to a hose 37 of a gas supply, so that a stream of gas can be provided through the hollow electrodes 27 into the gap 23. The gas supply may comprise at least one pump for pumping the gas.

The stator 17 comprises a liquid inlet 39 for providing the liquid into the cavitation chamber 13. At least one liquid outlet 41 is provided in the housing so that the liquid can exit the cavitation chamber 13. As shown, the liquid inlet 39 is aligned with a center axis CA of the stator 17. The liquid outlet 41 is arranged in the housing 11 such that it is located radially outward of the gap 13. The rotor 15 may therefore be sufficient as a pump for pumping the liquid through the cavitation chamber 13. Alternatively, the system may include an additional pump for pumping the liquid through the cavitation chamber 13.

In an aspect, the disclosure relates to a method of generating cavitation and a plasma in a combined cavitation and plasma generation system. The method comprises the steps of providing a liquid in the gap 23 of cavitation chamber 13, optionally providing a gas or gas stream to the cavitation chamber 13 by use of the at least one gas inlet 25, and providing a high voltage between the at least one first electrode 27 and the at least one second electrode 29.

At least in some embodiments, the system and/or method in accordance with the present disclosure exploits a synergy of hydrodynamic cavitation and non-thermal plasma discharge, to treat liquids. Hydrodynamic cavitation is generated in a rotary hydrodynamic cavitation generator in which electrodes in the form of tubes are installed through which a non-thermal plasma is formed in a cavitation chamber under overpressure conditions via a discharge. The rotating generator, in particular the rotor, may perform two functions: It creates the conditions for cavitation and it serves as a pump for pumping the liquid. The non-thermal discharge forms between the first and second electrodes. In some embodiments, the first electrodes are formed by brass tubes, evenly distributed over the stator of the cavitation chamber, and a second electrode is formed by housing, in particular the surface of the liquid stream, such as water, inside the electrically grounded cavitation chamber.

The mixing of the non-thermal plasma discharge with the cavitation bubbles may reduce the breakdown voltage for stable operation and the total power consumption. This allows the system to treat or purify liquids such as water, including disinfection and micropollutant reduction, in a more efficient way than existing technologies.

The system as shown in FIG. 1 synergistically combines plasma and cavitation in an efficient way using a single cavitation chamber 13 for producing the plasma and cavitation. By igniting a plasma or plasma jet directly in the gap 23, it can increase the degradation of various pollutants beyond the individual effects of plasma alone or cavitation alone.

In some embodiments, the at least a pair of surfaces of the rotor and stator includes rotor and stator surfaces that face each other only temporarily during rotation of the rotor with respect to the stator (not shown). The gap then extends into the region between the rotor and stator surfaces which face each other temporarily. Thus, the rotor and stator surfaces may have a more complex structure as shown in Fig. 1 and they may include elevations and/or depressions. For example, in some embodiments, protrusions on the rotor surface pass temporarily during rotation of the rotor closely by protrusions on the stator surface, thereby forming for a short time period a volume region with a small gap in which cavitation can occur. In such embodiments, the gap 23 extends into this small gap. A plasma may be formed in cavitation bubbles generated in this small gap, and the bubbles may exit from the small gap into the gap. Furthermore, in bubbles from an optional gas inlet a plasma can be ignited as well. The small gap region which is temporally present between surfaces that run past each other during rotation of the rotor with respect to the stator is herein also considered as a part of the gap. Such surfaces that run past each other during rotation of the rotor may extend in particular parallel to the axis of rotation of the rotor on the stator or rotor and thus form a partial surface of the stator or rotor surface (not shown in Fig. 1).

Further preferred embodiments and examples of a combined cavitation and plasma generation system and of a method of generating cavitation and a plasma in a combined cavitation and plasma generation system will be disclosed in the following list of items:
Item 1. A combined cavitation and plasma generation system, comprising:
   a housing (11) with a cavitation chamber (23) and at least a pair of a rotor (15) and a stator (17) arranged in the cavitation chamber (23), the rotor (15) and
   the stator (17) having at least a pair of surfaces (19, 21) facing each other, such that at least a gap (23) is formed between the rotor and stator surfaces (19, 21) in the cavitation chamber (13), the rotor (15) being rotatable with respect to the stator (17) and the stator and rotor surfaces (19, 21) are configured to generate, when the rotor (15) rotates, cavitation in a liquid, which is during the operation of the system in the gap (23) between the rotor and stator surfaces (19, 21), and
   at least one first electrode (27) and at least one second electrode (29), which is a counter electrode for the at least one first electrode (27), wherein the at least one first electrode (27) and the at least one second electrode (29) are exposed to the cavitation chamber (13) for generating, in particular igniting, a plasma discharge in at least a portion of the cavitation chamber (13), in particular in the gap (23) or at least in a portion of the gap (23).
Item 2. The combined cavitation and plasma generation system of Item 1, wherein at least one and preferably each of the at least one first electrode (27) is arranged in or on the stator (17) such that the at least one first electrode (27) is exposed to the gap (23).
Item 3. The combined cavitation and plasma generation system of any one of the Items 1 and 2,
   wherein at least one and preferably each of the at least one first electrode (27) is arranged in a passage (31) in the stator (17), wherein the passage extends from a side (45), which is opposite to the surface (21), so that an end (33) of the first electrode (27) lies at least approximately in a plane of the surface (21) of the stator (17), such that the end (33) of the first electrode (27) is exposed to the gap (23).
Item 4. The combined cavitation and plasma generation system of Item 3, wherein the end (33) of the first electrode (27) is offset from the plane, so that a small space (35) is formed in the passage (31) between the end (33) of the first electrode (27) and the gap (23).
Item 5. The combined cavitation and plasma generation system of any one of the Items 1 to 4,
   wherein the at least one first electrode (27) comprises two or more electrodes, and wherein the two or more electrodes are arranged on or in the stator (17) in a circle around a centre axis (CA) of the stator (17).
Item 6. The combined cavitation and plasma generation system of any one of the Items 1 to 5,
   wherein the system further comprises at least one gas inlet (25) into the cavitation chamber (13) for providing a gas, in particular a stream of gas, in the cavitation chamber (13) and in particular in the gap (23), in particular for generating a plasma discharge in at least a portion of the gas.
Item 7. The combined cavitation and plasma generation system of any one of the Items 1 to 6,
   wherein at least one and preferably each of the at least one first electrode (27) is designed as a hollow cylinder which is arranged in a passage (31) of the stator (17), and wherein the hollow cylinder is configured to be used as gas inlet (39) for gas into the cavitation chamber (23).
Item 8. The combined cavitation and plasma generation system of any one of the Items 1 to 7,
   wherein the at least one first electrode (27) consists of or comprises an electrically conductive material, such as brass, copper and silver, and/or wherein the at least one first electrode (27) is electrically isolated with regard to the stator (17), or wherein the stator (17) consists of an electrically non-conductive material, in particular to electrically isolate the stator (17) from the housing (11).
Item 9. The combined cavitation and plasma generation system of any one of the Items 1 to 8,
   wherein the at least one second electrode (29) is formed by or arranged in the housing (11), wherein, preferably, the housing (11) consists of or comprises an electrically conductive material, wherein, further preferably, the housing (11) is made of stainless steel.
Item 10. The combined cavitation and plasma generation system of any one of the Items 1 to 9,
   wherein the cavitation chamber (13) comprises an inlet (39) and an outlet (41) for the liquid, wherein one of the liquid inlet and liquid outlet (39, 41) is arranged in the stator (17), in particular in a passage through the stator (17), and the other one of the liquid inlet and liquid outlet (39, 41) is arranged in the housing (11).
Item 11. The combined cavitation and plasma generation system of any one of the Items 1 to 10,
   wherein the housing (11) has a cavity in which the cavitation chamber (13) is formed, wherein the housing (11) has an open side that is closed by the stator (17).
Item 12. The combined cavitation and plasma generation system of any one of the preceding Items 1 to 11,
   wherein the rotor (15) rotates about a rotation axis (R) which is aligned with a center axis (CA) of the stator (17).
Item 13. The combined cavitation and plasma generation system of any one of the Items 1 to 12,
   wherein the at least a pair of surfaces (19, 21) facing each other includes rotor and stator surfaces that face each other only temporarily during rotation of the rotor with respect to the stator, wherein the gap (23) extends into the region between the rotor and stator surfaces which face each other temporarily.
Item 14. A method of generating cavitation and a plasma in a combined cavitation and plasma generation system of any one of the Items 1 to 13, the method comprising:
   providing a liquid in the gap (23) of the cavitation chamber (13),
   optionally providing a gas through at least one gas inlet (25) to the cavitation chamber (13);
   providing a high voltage between the at least one first electrode (27) and at least one second electrode (29).

### List of reference signs

- 11: housing
- 13: cavitation chamber
- 15: rotor
- 17: stator
- 19: surface
- 21: surface
- 23: gap
- 25: gas inlet
- 27: first electrode
- 29: second electrode
- 31: passage
- 33: end of electrode
- 35: volume
- 37: hose
- 39: inlet for liquid
- 41: outlet for liquid
- 43: seal bearing
- 45: backside

- R: rotation axis
- CA: center axis

## Claims

1. A combined cavitation and plasma generation system, comprising:
a housing (11) with a cavitation chamber (23) and at least a pair of a rotor (15) and a stator (17) arranged in the cavitation chamber (23), the rotor (15) and the stator (17) having at least a pair of surfaces (19, 21) facing each other, such that at least a gap (23) is formed between the rotor and stator surfaces (19, 21) in the cavitation chamber (13), the rotor (15) being rotatable with respect to the stator (17) and the stator and rotor surfaces (19, 21) are configured to generate, when the rotor (15) rotates, cavitation in a liquid, which is during the operation of the system in the gap (23) between the rotor and stator surfaces (19, 21), and
at least one first electrode (27) and at least one second electrode (29), which is a counter electrode for the at least one first electrode (27), wherein the at least one first electrode (27) and the at least one second electrode (29) are exposed to the cavitation chamber (13) for generating, in particular igniting, a plasma discharge in at least a portion of the cavitation chamber (13), in particular in the gap (23) or at least in a portion of the gap (23),
wherein at least one and preferably each of the at least one first electrode (27) is arranged in a passage (31) in the stator (17), wherein the passage (31) extends from a side (45) of the stator (17), which is opposite to the surface (21), to a side of the stator (17) having the surface (21), and
wherein an end (33) of the first electrode (27) is offset from a plane of the surface (21) of the stator (17), so that a small space (35) is formed in the passage (31) between the end (33) of the first electrode (27) and the gap (23).

2. The combined cavitation and plasma generation system of claim 1,
wherein at least one and preferably each of the at least one first electrode (27) is arranged in or on the stator (17) such that the at least one first electrode (27) is exposed to the gap (23).

3. The combined cavitation and plasma generation system of any one of the preceding claims,
wherein the end (33) of the first electrode (27) is exposed to the gap (23), in particular to the small space (35) in the passage which exits into the gap (23).

4. The combined cavitation and plasma generation system of any one of the preceding claims,
wherein the end (33) of the first electrode (27) is arranged inside the passage (31) at a distance from the plane of the surface (21) of the stator (17), and/or wherein the passage (31) extends continuously through the stator (17) from the side (45), which is opposite to the surface (21), to the side having the surface (21).

5. The combined cavitation and plasma generation system of any one of the preceding claims,
wherein the at least one first electrode (27) comprises two or more electrodes, and wherein the two or more electrodes are arranged on or in the stator (17) in a circle around a centre axis (CA) of the stator (17).

6. The combined cavitation and plasma generation system of any one of the preceding claims,
wherein the system further comprises at least one gas inlet (25) into the cavitation chamber (13) for providing a gas, in particular a stream of gas, in the cavitation chamber (13) and in particular in the gap (23), in particular for generating a plasma discharge in at least a portion of the gas.

7. The combined cavitation and plasma generation system of any one of the preceding claims,
wherein at least one and preferably each of the at least one first electrode (27) is designed as a hollow cylinder which is arranged in a passage (31) of the stator (17), and wherein the hollow cylinder is configured to be used as gas inlet (39) for gas into the cavitation chamber (23).

8. The combined cavitation and plasma generation system of any one of the preceding claims,
wherein the at least one first electrode (27) consists of or comprises an electrically conductive material, such as brass, copper and silver, and/or wherein the at least one first electrode (27) is electrically isolated with regard to the stator (17), or wherein the stator (17) consists of an electrically non-conductive material, in particular to electrically isolate the stator (17) from the housing (11).

9. The combined cavitation and plasma generation system of any one of the preceding claims,
wherein the at least one second electrode (29) is formed by or arranged in the housing (11), wherein, preferably, the housing (11) consists of or comprises an electrically conductive material, wherein, further preferably, the housing (11) is made of stainless steel.

10. The combined cavitation and plasma generation system of any one of the preceding claims,
wherein the cavitation chamber (13) comprises an inlet (39) and an outlet (41) for the liquid, wherein one of the liquid inlet and liquid outlet (39, 41) is arranged in the stator (17), in particular in a passage through the stator (17), and the other one of the liquid inlet and liquid outlet (39, 41) is arranged in the housing (11).

11. The combined cavitation and plasma generation system of any one of the preceding claims,
wherein the housing (11) has a cavity in which the cavitation chamber (13) is formed, wherein the housing (11) has an open side that is closed by the stator (17).

12. The combined cavitation and plasma generation system of any one of the preceding claims,
wherein the rotor (15) rotates about a rotation axis (R) which is aligned with a center axis (CA) of the stator (17).

13. The combined cavitation and plasma generation system of any one of the preceding claims,
wherein the at least a pair of surfaces (19, 21) facing each other includes rotor and stator surfaces that face each other only temporarily during rotation of the rotor with respect to the stator, wherein the gap (23) extends into the region between the rotor and stator surfaces which face each other temporarily.

14. A method of generating cavitation and a plasma in a combined cavitation and plasma generation system of any one of the preceding claims, the method comprising:
providing a liquid in the gap (23) of the cavitation chamber (13),
optionally providing a gas through at least one gas inlet (25) to the cavitation chamber (13);
providing a high voltage between the at least one first electrode (27) and at least one second electrode (29).
